# EUROPEAN PATENT SPECIFICATION

(11) **EP 1 792 711 B1**
(45) Date of publication and mention of the grant of the patent: **11.03.2009**
(21) Application number: 06125193.0
(22) Date of filing: 01.12.2006
(51) Int. Cl.: B29D 30/12, B29D 30/06

(54) **Heated tire building core assembly and method of its assembly**
Beheizte Reifenbaukernanordnung und Verfahren zu seiner Zusammenstellung
Assemblage d'un noyau chauffable de pneu et son procédé d'assemblage

(30) Priority: 02.12.2005 US 293397
(43) Date of publication of application: 06.06.2007
(73) Proprietor: The Goodyear Tire & Rubber Company, Akron, Ohio 44316-0001 (US)
(72) Inventor: Lundell, Dennis Alan, Akron, OH 44313 (US); Currie, William Dudley, Stow, OH 44224 (US); Henthorne, David Alan, Copley, OH 44321-1752 (US)
(74) Representative: Kutsch, Bernd

(56) References cited:
- EP-A2- 0 893 237
- WO-A-82/00017
- GB-A- 167 073
- GB-A- 549 905
- JP-A- 11 320 567
- US-A1- 1 682 620
- US-A1- 2 123 586
- US-A1- 2003 157 209
- US-B1- 6 203 641

## Description

### Field of the Invention

The invention relates generally to a tire building core for use in the construction of an uncured tire and, more specifically, to a core assembly having integral heating and automatic disassembly capability.

### Background of the Invention

Historically, the pneumatic tire has been fabricated as a laminate structure of generally toroidal shape having beads, a tread, belt reinforcement, and a carcass. The manufacturing technologies employed for the most part involved assembling the many tire components from flat strips or sheets of material. Each component is placed on a building drum and cut to length such that the ends of the component meet or overlap creating a splice.

In the first stage of assembly the prior art carcass will normally include one or more plies, and a pair of sidewalls, a pair of apexes, an innerliner, a pair of chafers and perhaps a pair of gum shoulder strips. Annular bead cores can be added during this first stage of tire building and the plies can be turned around the bead cores to form the ply turnups.

This intermediate article of manufacture would be cylindrically formed at this point in the first stage of assembly. The cylindrical carcass is then expanded into a toroidal shape after completion of the first stage of tire building. Reinforcing belts and the tread are added to this intermediate article during a second stage of tire manufacture, which can occur using the same building drum or work station.

This form of manufacturing a tire from flat components that are then formed toroidally limits the ability of the tire to be produced in a most uniform fashion. As a result, an improved method and apparatus has been proposed, the method involving building a tire sequentially on a core or toroidal body. The core or toroidal body rotates about its axis as tire components are applied layer by layer to the outer core surface. When the tire build procedure is completed on the core, the green tire will have a shape and dimension only slightly smaller than the finished tire. The aforementioned variances resulting from conventional drum expansion are thus eliminated. Building a tire on a core to a final tire shape, dimension, and uniformity therefore allows for improved quality control of the finished product.

Building a tire component by component on a core or toroidal mandrel, however, presents some significant challenges. At one or more points in the tire building procedure, it may be necessary to transport the core assembly from location to location. The core assembly should, accordingly, facilitate an efficient and speedy relocation of the core assembly during the tire manufacturing process. In addition, once component by component tire build is accomplished on the core, the green tire must be subjected to heat during a curing cycle. An acceptable core assembly should not impede a consistent heat transfer to the green tire or otherwise interfere with the cure of the green tire surrounding the core. Still further, at some point in the tire manufacturing process, the tire must be removed from the core. A suitable core assembly, therefore, will accommodate a speedy and efficient removal of the tire from the core assembly.

GB-A- 549,905 describes a tire building core assembly comprising a shell assembly with a throughbore and an elongate spindle assembly which is configured to couple the shell assembly throughbore to maintain the shell assembly in an assembled configuration. The coupling is done by means of a single central screw.

US-A- 2003/0157209 describes a dismountable toroidal support for tire manufacture.

Another tire building core assembly is disclosed in GB-A-167 073.

### Summary of the Invention

According to one aspect of the invention, a tire building core assembly includes a shell assembly configured to provide an external tire-building toroidal surface and a central shell assembly throughbore. An elongate spindle assembly comprising first and second spindle units is configured for axial extension from opposite sides into the shell assembly throughbore. For example, this may involve only a linear movement of the spindle units toward each other, or a linear movement and rotational movement similar to a bayonet connection. The spindle assembly units are configured to couple within the shell assembly throughbore to maintain the shell assembly in an assembled configuration. The shell assembly is formed by a plurality of shell segments and the spindle assembly positioned within the shell assembly throughbore retains the shell segments in the assembled configuration.

According to another aspect, a tire building core includes a shell assembly having a plurality of shell segments that move between an assembled configuration forming an external core tire-building toroidal surface and a disassembled configuration. The shell assembly segments define a central throughbore in the assembled configuration. An elongate spindle assembly comprising first and second spindle units is configured for movement from opposite sides relative to the shell assembly throughbore. The spindle units within the throughbore retain the shell segments in the assembled configuration.

Pursuant to another aspect of the invention, one or more shell segments may include an electrical heating element and an electrical connection is established with the heating element by suitably positioned electrical connectors carried by one or both spindle units. Electrical connection may be established and broken by movement of one or both spindle units relative to the throughbore.

According to another aspect of the invention, a method for assembling a transportable tire building core according to claim 9 is disclosed.

The method may further include establishing an electrical connection between electrical connections carried by one or both spindle units and heating elements within one or more shell segments as the spindle units move relative to the shell assembly central throughbore.

In one aspect of the inventive apparatus or method, the heating element connector is positioned adjacent the shell assembly throughbore.

In a second aspect of the inventive apparatus or method, the at least one spindle unit includes an electrical interface connector electrically connecting with the one spindle unit connector.

In a further aspect of the inventive apparatus or method, the first and second elongate spindle units respectively form a mating protrusion and a socket at forward ends thereof.

In a further aspect of the inventive apparatus or method, the first and second elongate spindle units and the shell assembly have alignment members that couple as the spindle units move axially into the shell assembly throughbore.

In yet a further aspect of the inventive apparatus or method, at least one of the spindle units includes a rearward end portion configured to protrude from the shell assembly throughbore, the rearward end portion configured to couple with a tire building core assembly transport arm.

In yet a further aspect of the inventive apparatus or method, the rearward end portion of the at least one spindle unit comprises a socket.

### Brief Description of the Drawings

The invention will be described by way of example and with reference to the accompanying drawings in which:
FIG. 1 is an assembled perspective view of a tire building core assembly configured pursuant to the invention.
FIG. 2 is a front end elevation view thereof.
FIG. 3 is an exploded perspective view thereof.
FIG. 4 is a longitudinal section view thereof taken along the line 4-4 of FIG. 2.
FIG. 5 is side elevation view thereof.
FIG. 6 is a partial sectional view through the view of FIG. 5 taken along the line 6-6.
FIG. 7 is an end elevation of a spindle unit.
FIG. 8 is a transverse section view taken along the line 8-8 of FIG. 7.
FIG. 9 is a partial section view of a spring pin taken along the line 9-9 of FIG. 7.
FIG. 10 is a partial section view through the spindle unit of FIG. 7 taken along line 10-10.
FIG. 11 is a longitudinal section view through the spindle units shown in the mated configuration.
FIG. 12 is a longitudinal section view through the spindle units shown in the unmated.
FIG. 13 is a right side perspective view of the spindle units shown in the mated configuration.
FIG. 14 is a right side perspective view of the spindle units shown in the unmated configuration.
FIG. 15A is an end perspective view of a shell key segment.
FIG. 15B is an end perspective view of a shell large segment.

### Detailed Description of the Illustrative Embodiments

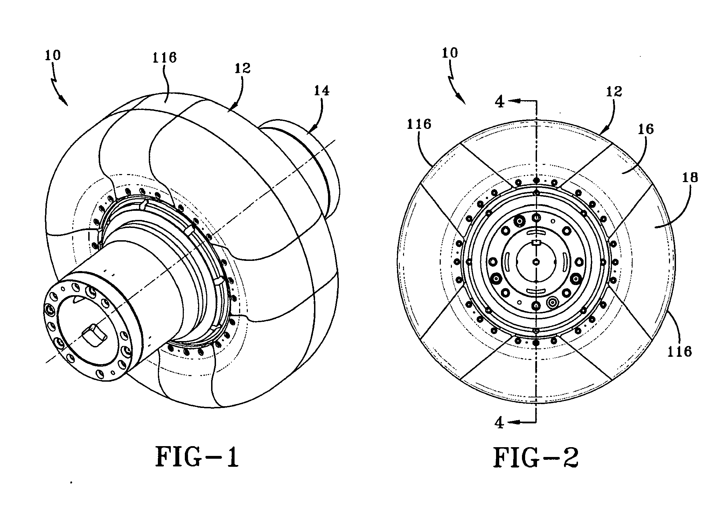

Referring initially to FIGS. 1 and 2, a tire building core assembly 10 is shown in the assembled configuration. The core assembly 10 includes a shell assembly 12 configured to provide a toroidal form substantially near final shape and dimension of a final tire. The shell assembly 12 allows for a more accurate placement of tire components in the building of an uncured tire because the tire is built to near final shape. The shell assembly receives an elongate spindle assembly 14 through an axial throughbore of assembly 12. The shell assembly 12 is constructed from alternate shell key segments 16 and large shell segments 18. In general, the tire components are assembled to an outer toroidal surface of the shell assembly 12 to form an uncured tire. The core assembly with uncured tire may then be loaded into a mold for curing. During curing, the core assembly 10 provides additional curing heat through heating elements (explained following) located on the inside surface of shell segments 16, 18. The core is removed from the cured tire by disassembling it and removing the core assembly in segments. The segments are removed from the cured tire, starting with wedge shaped key segments 16. Once the key segments are pulled in radially, they may be removed axially from the tire.

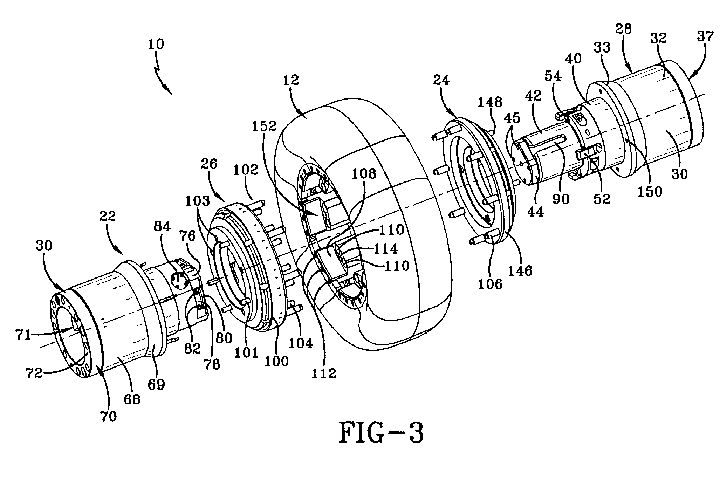

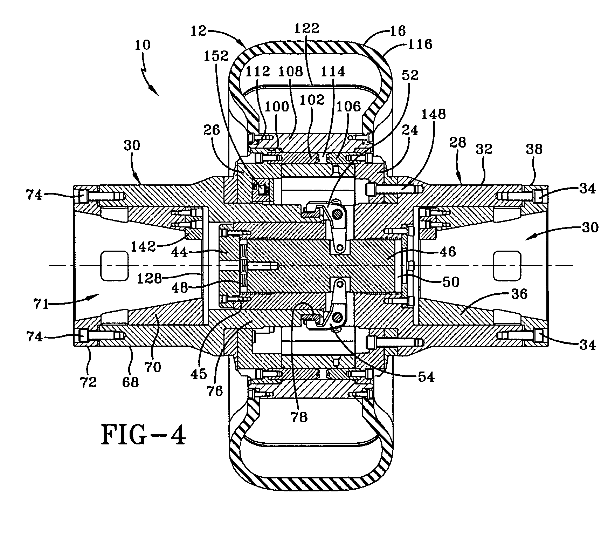

Referring to FIGS. 3 and 4, two mating spindle half assemblies 20, 22 (hereinafter referred also to as spindle "units") including respective ring assemblies 24, 26 join to form the spindle assembly 14. Spindle unit assembly 20 is the latching half of the spindle assembly while generally cylindrical unit assembly 22 is the half of the spindle assembly that electrically services the core assembly as will be explained.

The spindle unit assembly 20 includes a generally cylindrical outer housing 28 having a rearward housing portion 32 of larger outer diameter, an intermediate housing portion 40 of reduced outer diameter, and a forward housing sleeve portion 42 of reduced outer diameter. An annular flange 33 is disposed approximately at the intersection of rearward housing portion 32 and intermediate housing portion 40. An insert body 36 is received within the body 32 and attaches to portion 32 by means of a peripheral series of attachment screws 34. The insert body 36 has a conical internal axial passageway 37 that tapers through the insert body 36 to the forward cylindrical sleeve portion 42 of the body 32. Retained within the forward sleeve 42 is an elongate cylindrical actuating shaft 46. Shaft 46 resides within an axial passageway 50 through sleeve portion 42 and extends forward to an end cap 44. The end cap 44 attaches to the forward end of sleeve portion 42 by four screws 45. Four latch members 52, 54, 56, 58 are circumferentially spaced around and are pivotally attached to the intermediate portion 40 of the spindle unit housing 28.

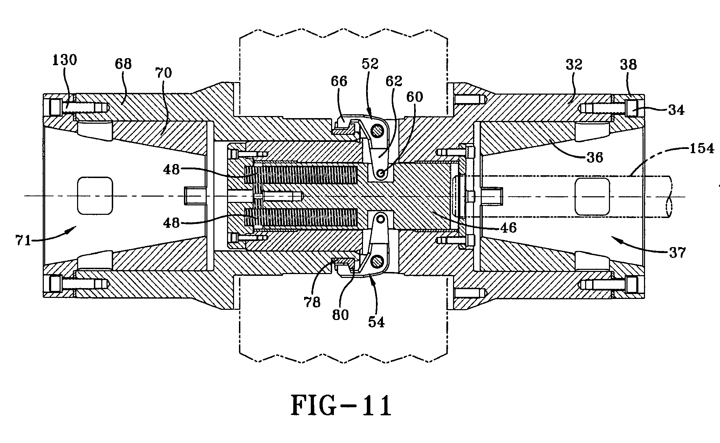

FIG. 11 illustrates the two spindle units 20, 22 in the mated orientation. Each of the four latch members 52, 54 (54, 56 not shown) has an L-shaped latch arm 62 fixedly attached by a pin 60 to a peripheral side of the actuator shaft 46. The latch arm 62 of each latch member has an intermediate elbow portion pivotally attached by a pivot pin 64 to the intermediate portion 40 of the outer housing. At the opposite remote end of the arm 62 is a dependent latch flange 66.

As best viewed from FIGS. 3 and 4, the spindle unit housing 30 of the opposite spindle unit 22 includes a cylindrical housing rearward portion 68 of relatively larger outer diameter, a housing forward portion 67 of reduced outer diameter, and a peripheral circumferential flange 69 disposed between housing portions 67, 68. An insert body 70 is received within the housing portion 68. An outward extending peripheral flange 72 of the insert body 70 abuts against a rearward rim of the housing portion 68, retained by peripherally located assembly screws 74. A conical passageway 71 extends from the rear into the insert body 70. The outer cylindrical housing 68 has a forward portion 76 having a smaller outer diameter. Four latch plates 78, corresponding in location to the four latch members 52, 54, 56, 58, on the opposite spindle unit, are affixed to the forward housing portion 76 by screws 82. Latch plates 78 each provide a raised tapered flange 80 over which the end 66 of a respective latch member 52-58 rides to latch the spindle units 20, 22 together.

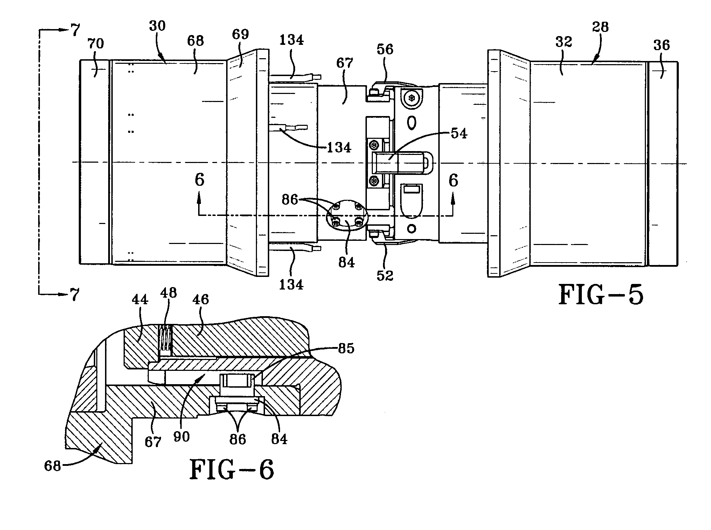

In reference to FIG. 5, a keying protrusion 84 is mounted by four screws 86 to face inward from the housing portion 68 proximate the forward end. Keying protrusion 84 has an inward projecting end 88 that aligns and is received within within a longitudinal slot 90 formed along an outer peripheral surface of the sleeve portion 42 of the housing 28 of the spindle unit 20. The keying protrusion 84 keys the sleeve portion 42 with the forward end 67 of the housing 68.

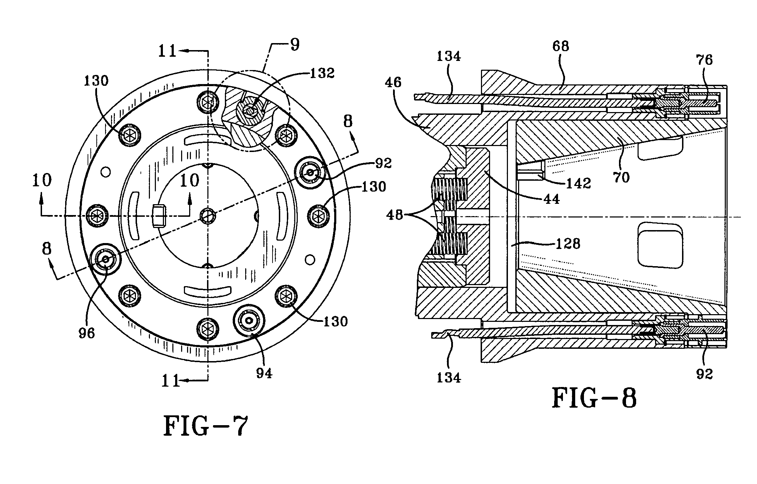

With reference to FIGS. 3, 4, 7, and 13, extending within a rearward end of the insert body 70 are peripherally spaced electrical connectors 92, 94, 96, and a ground connector 98. The connectors 92-98 are preferably, but not necessarily, connector pin sockets mating with pins from external power supply lines (not shown). The circumferential ring member 26 mounts over a forward end of the housing 30 and registers against flange 69. An outward annular surface 100 circumscribes the ring member 26. A plurality of pin members 101 extend rearward from the ring member 26 and are received into the forward housing portion 67 to secure the ring assembly 26 to housing 30. Eight peripherally disposed locating pins 102 extend forward from the ring member 26 and a plurality of electrical pins 104 project forward from the periphery of the ring member 26. It is preferred, although not necessary, that two electrical pins 104 be provided for each segment of the shell assembly as will be explained. While the electrical interconnections described herein are specific as to male and female contacts, the invention is not to be so limited. Other electrical connector devices may be employed if preferred.

The ring member 24 of the spindle unit 20 has a circumferentially spaced array of eight locator pins 106 extending forward. The ring member 24 fits over the forward end of the outer housing 28 and abuts against flange 33. Ring member 24 and ring member 26 are intended to remain fixedly assembled to the respective spindle housing 28, 26 of each.

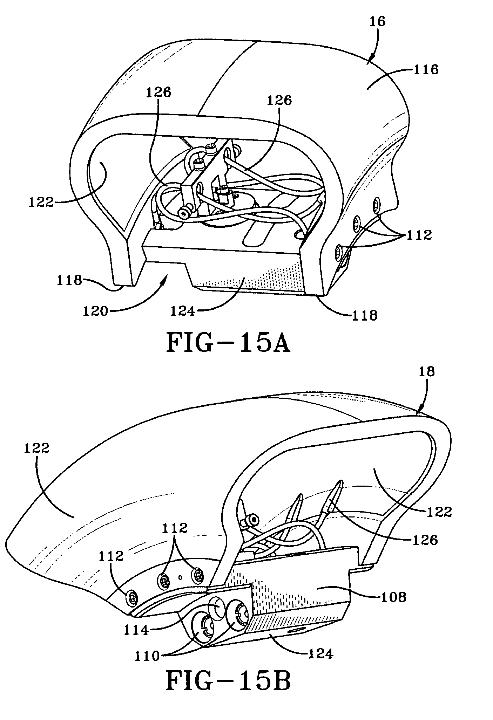

As best seen from FIGS. 3, 4, 15A, and 15B, the shell assembly 12 is configured of circumferential alternating key segments 16 and larger shell segments 18. Each segment is generally hollow and bounded by an outer shell segment surface 116 terminating at opposite segment edges 118. The internal chamber 120 of each segment 16, 18 is closed at a lower end by a base plate member 108 that extends between the shell segment edges 118 and attaches to the segment by three screws 112 on each side. The internal surface of the shell segment is lined with an electrical heating element 122 of a type available commercially within the industry. The element 122 functions to heat the shell segment so as to accelerate tire curing and reduce manufacturing cycle time.

The base plate member of each shell segment is configured having a dependent portion 124. Two electrical connector sockets 110 reside within portion 124 from one end. An alignment throughbore 114 extends through the dependent portion 124 from end to end. The electrical sockets 110 are wired as shown at 126 to deliver electrical power to the heating element 122.

As will be appreciated from FIG. 3, the electrical shell segments unite to form a toroidal body in the operative position shown. FIG. 3 thus illustrates the shell assembly having segments in an assembled configuration. In the assembled configuration, the outer surfaces 116 of the shell segments unite to provide a toroidal surface in the form of a tire. Dimensionally, the shape created by the outer surfaces 116 of the shell segments 16, 18 is substantially that of a finished tire. Tire components may be radially applied to the united outer surfaces 116 of the shell segments 16, 18 to form an uncured tire dimensionally equivalent to the finished tire. In the united position shown in FIG. 3, the connector sockets 110 form a circular pattern accessible from one side, that side being the side of spindle half unit 22 in FIG. 3.

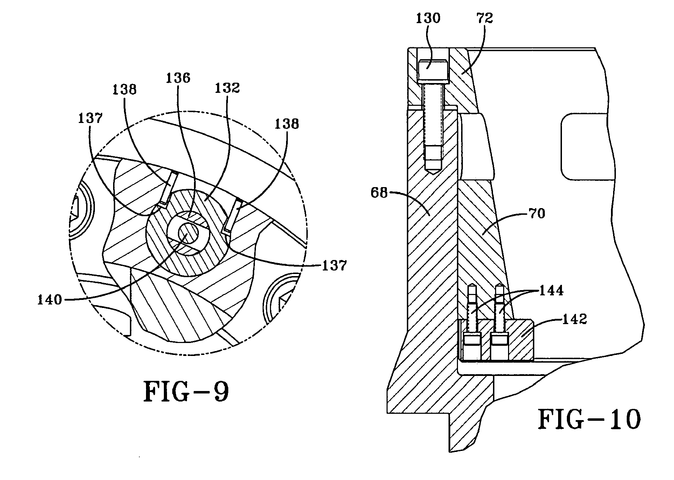

Referring to FIGS. 9 and 10, screws 130 attach through the outer flange 72 of insert body 70 into the outer housing portion 68 to affix the insert body 70 to the housing 28. A spring pin 132 is mounted within the inset body 70 and includes outer notches 137 that receive spaced apart elongate flanges 138 to locate the pin 132 within the insert body 70. Internal spring 136 and pin 138 cooperate to lock the insert body 70 within the outer housing portion 68. The forward end of the axial bore 71 of the insert body 70 is enclosed by a base plate 128 affixed to the insert body 70 by means of assembly screws 144.

With continued reference to FIGS. 3 and 4, an outer surface 146 circumscribes the ring member 24. The ring member 24 has a circumferential array of rearwardly directed attachment pins 148 that enter into sockets 150 in flange 33 to attach the ring 24 to the housing 28. Rearwardly directed pins 101 from the ring member 26 project into sockets within the forward end 67 of the housing 30 to securely attach the ring member 26 against flange 69.

The electrical connectors 92, 94, 96, and ground connector 98 are electrically wired by leads 134 through the body 68 and into the ring member 26 where the leads 134 are terminated to the electrical pin members 104. Pin members 104 project forward from the ring member 26 and are arranged so that two pin members 104 align with two electrical sockets 110 per each shell segment 16, 18. Thus, external electrical power lines (not shown) connect to the rearward connectors 92-98 and therefrom via pin members 104 of the ring member 26 to each of the shell segments equipped with a heating element. Separation of the pin members 104 from the shell segment connectors 110 discontinues electrical power to the heating elements whenever disconnection of the ring member 26 from the shell assembly 12 is effected.

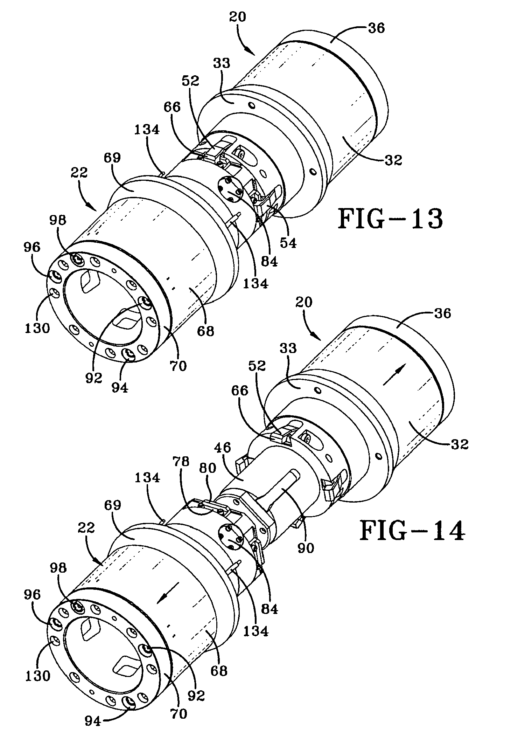

Referring to FIGS. 1, 2, 3, and 4, it will be appreciated that the shell segments 16, 18 form a throughbore 150. The spindle units 20, 22 are aligned on opposite sides of the throughbore 150 and moved axially into mating engagement within the throughbore 150 as shown by FIGS. 13 and 14. The spindle units 20, 22 are shown without the ring members 24, 26 attached thereto for the purpose of illustration in FIGS. 13 and 14. As the spindle halves 20, 22 are moved axially together, the actuator shaft 46 of spindle unit 20 is received within the forward axial chamber 50 the opposite spindle unit 22. Keying projection 88 of cylindrical body 68 is aligned within the slot 90 of the actuator shaft 46 and acts to keep the shaft 46 in axial alignment with the actuator chamber 50. Six die spring members 48 are deployed within the chamber 50 in the embodiment shown but more or fewer spring members may be used if desired. The die spring members 48 are seated between the end cap 44 and the forward end of the actuator shaft 46. Accordingly, as the shaft 46 progresses down the axial chamber 50, the spring members 48 load in compression.

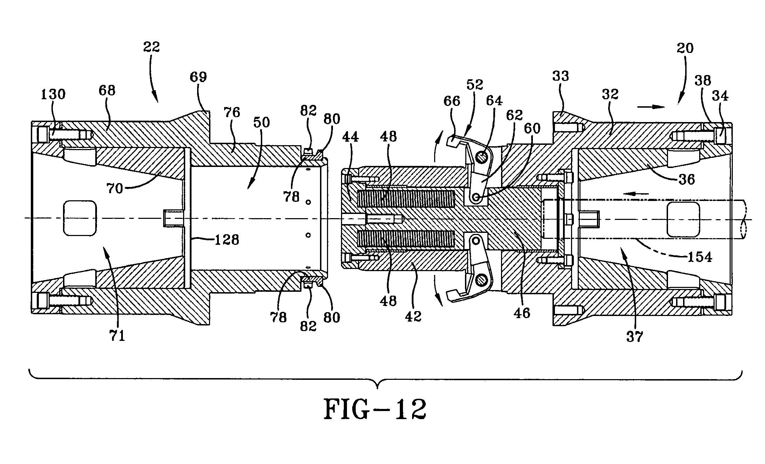

Operation of the latching assembly will be described in reference to FIGS. 4, 11, and 12, 13, 14. FIGS. 12 and 14 show the spindle units 20, 22 (with the ring members removed for the purpose of illustration) in a separated, axially aligned orientation. The spindle units are transported by a separate transport mechanism that includes components fitting within axial passageway 71 of the insert body 70 and into axial passageway 37 of the insert body 36. The transport mechanisms transport the spindle units 20, 22 between the separated position (FIGS. 12 and 14) and the united position (FIGS. 11 and 13). In addition, the transport mechanism can function to transport the united shell assembly 12 and spindle assembly 14 (FIGS. 1 and 2) from a tire building location into a tire curing station as a unit. The transport mechanism for the spindle unit 20 includes an actuator rod 154 that engages the rearward end of actuator shaft 46 and pushes the shaft 46 into a forward position within the chamber 50. The pins 60 couple the arm 62 of each of the four (more or fewer latch arm assemblies may be deployed if desired) latch arm members 52, 54, 56, 58 to the actuator shaft 46. Each latch arm members 52-58 are pivotally attached at pin 64 to the cylindrical body 32 and rotates in reciprocal fashion as the actuator shaft 46 is moved into and out of the chamber 50. The actuator piston 154 presses the actuator shaft forward, compressing spring members 48, and causing the latch arm members 52-58 to rotate. Rotation of the arm members in respective directions separates the latch ends 66 of the members 52-58 from the actuator shaft 46 body into an "open" orientation. The clearance thus created allows the latch ends to pass over the raised flanges 80 in the respective locking sockets 78 mounted at the forward end of the cylindrical body 68 of the opposite spindle unit 22. The spindle units are moved axially toward each other and into the shell throughbore 152 with the latch members 52-58 in the open orientation. It will be appreciated that the two visible latch arm members in FIG. 12 (52 and 54) rotate in opposite respective directions. Once in the mated condition of FIGS. 11, 13 within the shell throughbore 152, the actuator rod 154 is withdrawn, releasing spring members 48 to push the actuator shaft 46 to the rear as shown by FIG. 11. Movement of the shaft 46 rearward causes the latch members 52-58 to rotate in a respective reverse direction. Such rotation causes the latch ends 66 of the latch members 52-58 to rotate into respective locking sockets 78 at the forward end of the spindle unit 22. Once within sockets 78, the latch members 52-58 latch the spindle units together and prevent an axial separation until removal of the spindle units from the shell throughbore 150 is desired.

Movement of the spindle units 20, 22 into the mated condition depicted in FIGS. 11, 13 acts to place the locating pins 102 into the sockets 114 of the shell segments, whereby self-aligning the spindle units 20, 22 with the shell assembly 12. In addition, in the mated condition, the electrical pins 104 of the ring member 26 are brought into a mating relationship with the electrical connectors 110 in the segment base units 108. As explained previously, the connectors 110 are wired to service the heating element of a respective shell segment 16, 18. Thus, axial movement of the spindle units 20, 22 serves to establish electrical interconnection between the connector sockets 92, 94, 96, 98 mounted to the rear end of the unit body 68 and the shell segment heating elements.

From FIGS. 3, 4. 11, 13, it will be noted that the assembled spindle assembly 14 may be used to transport the shell assembly 12 from one location, such as the tire building station, to another station such as the curing station. In addition, the outer surface 100 of ring member 26 and 146 of the ring member 24, with the spindle units in the mated condition, are disposed below the shell segment base plates 108. See FIG. 4. Thus, the ring members 24, 26 serve to support the segments in the assembled condition as tire components are added to the toroidal tire building surface created by shell segment surfaces 116.

It will be appreciated that the subject assembly provides a positive means of attachment between the tire building shell assembly or core 12 and any of the building, curing, or other stations involved in the manufacturing process. Since the attachment points are located in each end of the core (passageways 37 and 71), the attachment points may also be used by a device or devices that transport the core between the stations. The mechanism allows for automatic attachment and detachment by operation of the latch members 52-58 and provides sufficient accuracy and rigidity for the motions required for precision tire manufacture. The linkage driven latch members 52, 54, 56, 58 conveniently and efficiently lock the spindle units 20, 22 within the shell assembly 12, and thereby lock the shell segments 16, 18 into the united toroidal configuration useful for the tire building stage of manufacture.

In addition, the same axial relative movement between the spindle units 20, 22 that effects a latching of the units together, also is used for establishing the necessary electrical connection with shell segment heating elements. It will be noted that the electrical lines and connector disposition within the spindle units 20, 22, are internally disposed within the cylindrical bodies 68 and the ring member 26 and are thus protected from damage caused by contact with the external environment.

The subject core assembly mechanism provides a form on which components are assembled (segment surfaces 116) to form an uncured tire. The core assembly and uncured tire can be loaded into a mold for curing. During curing, the core provides additional curing heat through heating elements 122 on the inside surfaces of the shell segments forming the shape of the inside of the tire. The core is removed from the cured tire by disassembling it and removing the shell in segments. To detach the spindle units 20, 22, the segments are released by first removing the two spindle halves 20, 22. The spring mechanism holding the spindle units 20, 22, together hold the segments in place and support the shell segments against the high forces involved in molding the tire. The external actuator 154 in the core handling device releases the spindle latch, allowing the spindle halves 20, 22 to be disassembled axially. The action also disengages the electrical connections that transmit electrical power to the core segment heating elements.

Once the spindle assembly is removed, the shell segments are moved radially inward into a disassembled configuration. The shell segments may thus be removed from the tire one at a time, starting with the alternate keying segments 16 shaped in the form of a wedge to allow such segments to be pulled radially inward. Once the keying segments 16 are removed, enough clearance exists to radially move the larger segments 18 inward and then removed axially from the tire.

The subject invention thus provides a tire building core having internal heating and automatic disassembly capability. The use of a core improves the accuracy of placement of components because the tire is built near final shape upon the surfaces 116 of the shell segments. The entire core is held together with a single latching device as opposed to separate latches on each segment. Cycle time is thus reduced. The ring members 24, 26 provide pins 102, 106 that locate into sockets within the shell segments as the spindle units are axially mated. The outer surfaces of the ring members 24, 26 retain the segments and provide support. This pin and ring method of retaining the segments provides a robust support for the segments when they become subjected to substantial forces in the molding operation. The pin and ring method of retaining the segments also provides a guide to align the electrical connectors as the segments and the core are reassembled. Still further, the pin and ring method of retaining the segments provides a method of locating the segments accurately with a simple axial motion, facilitating alignment of the shell segments with tapers and facilitating automatic assembly and disassembly of the core and shell assembly components.

## Claims

1. A tire building core assembly (10) comprising:
a shell assembly (12) configured to provide an external tire-building toroidal surface and a central shell assembly throughbore; and
an elongate spindle assembly (14) comprising first and second spindle units (20, 22) configured for axial extension from opposite sides into the shell assembly throughbore, wherein the spindle assembly units (20, 22) are configured to couple within the shell assembly throughbore to maintain the shell assembly (12) in an assembled configuration.

2. The tire building core assembly of claim 1, wherein the shell assembly (12) has a plurality of shell segments (16, 18) that are movable between an assembled configuration forming the external core tire-building toroidal surface and a disassembled configuration, the shell assembly segments (16, 18) defining the central throughbore in the assembled configuration; and wherein the spindle units (20, 22) within the throughbore retain the shell segments (16, 18) in the assembled configuration.

3. The tire building core assembly of claim 1 or 2, further comprising at least one heating element (122) coupled to the shell assembly (12), at least one of the spindle units (20, 22) transporting an electrical connector (104, 106) positioned to engage an electrical connector of the at least one heating element (122) responsive to movement of the one spindle unit (20, 22) with respect to the shell assembly throughbore.

4. The tire building core assembly of at least one of the previous claims, wherein at least one shell segment (16, 18) includes an electrical heating element (122), and wherein at least one of the spindle units (20, 22) transports an electrical connector (104, 106) positioned to electrically engage an electrical connector of the heating element (122) responsive to movement of the at least one spindle unit with respect to the shell assembly throughbore.

5. The tire building core assembly of at least one of the previous claims, wherein the electrical connector (122) of the at least one spindle unit breaks (20, 22) electrical contact with the heating element connector as the at least one spindle unit is moved with respect to the shell assembly throughbore.

6. The tire building core assembly of at least one of the previous claims, wherein the electrical connector of the at least one spindle unit is peripherally disposed and positioned to align with the heating element connector as the at least one spindle unit moves axially into the shell assembly throughbore.

7. The tire building core assembly of at least one of the previous claims, wherein at least one of the spindle units includes a protruding rearward end portion configured to couple with a tire building core assembly transport arm, the rearward end portion of the at least one spindle unit preferably comprising a socket.

8. The tire building core assembly of at least one of the previous claims, wherein the spindle units each include a peripheral surface for supporting the shell segments in the assembled configuration.

9. A method for assembling a tire building core of the type having a plurality of shell segments (16, 18) forming in an assembled configuration a tire supporting toroidal surface and a central throughbore, the method comprising:
orienting the shell segments (16, 18) in into the assembled configuration;
advancing first and second elongate spindle units (20, 22) into the central throughbore; and
coupling the first and second spindle units (20, 22) together within the shell assembly to retain the shell segments (16, 18) in the assembled configuration.

10. The method according to claim 9, further comprising:
a) protruding an end portion of at least one spindle unit (20, 22) from the shell assembly throughbore, the protruding end portion being configured to couple with an external core assembly engaging arm mechanism; and/or
b) establishing an electrical connection between a connector of at least one of the spindle units and a heating element of at least one shell segment.

## Patentansprüche

1. Reifenaufbaukernbaugruppe (10), die Folgendes aufweist:
eine Schalenbaugruppe (12), die so gestaltet ist, dass eine äußere Reifenaufbau-Torusfläche und eine zentrale Schalenbaugruppen-Durchgangsbohrung bereitgestellt ist; und
eine langgestreckte Radachsenbaugruppe (14), die eine erste und eine zweite Radachseneinheit (20, 22) aufweist, die so gestaltet sind, dass sie sich von entgegengesetzten Seiten in die Schalenbaugruppen-Durchgangsbohrung erstrecken, wobei die Radachsenbaugruppeneinheiten (20, 22) so gestaltet sind, dass sie sich im Inneren der Schalenbaugruppen-Durchgangsbohrung miteinander verbinden, um die Schalenbaugruppe (12) in einer zusammengesetzten Konfiguration zu halten.

2. Reifenaufbaukernbaugruppe nach Anspruch 1, wobei die Schalenbaugruppe (12) mehrere Schalensegmente (16, 18) besitzt, die zwischen einer zusammengesetzten Konfiguration, welche die äußere Reifenaufbau-Torusfläche bildet, und einer nicht zusammengesetzten Konfiguration bewegbar sind, wobei die Schalenbaugruppensegmente (16, 18) in der zusammengesetzten Konfiguration eine zentrale Durchgangsbohrung bilden; und wobei die Radachseneinheiten (20, 22) die Schalensegmente (16, 18) in der zusammengesetzten Konfiguration im Inneren der Durchgangsbohrung zurückhalten.

3. Reifenaufbaukernbaugruppe nach Anspruch 1 oder 2, darüber hinaus mindestens ein mit der Schalenbaugruppe (12) verbundenes Heizelement (122) aufweisend, wobei mindestens eine der Radachseneinheiten (20, 22) einen elektrischen Verbinder (104, 106) transportiert, der dazu angeordnet ist, einen elektrischen Verbinder des mindestens einen Heizelements (122) im Ansprechen auf eine Bewegung der einen Radachseneinheit (20, 22) in Hinblick auf die Schalenbaugruppen-Durchgangsbohrung in Eingriff zu nehmen.

4. Reifenaufbaukernbaugruppe nach mindestens einem der vorhergehenden Ansprüche, wobei mindestens ein Schalensegment (16, 18) ein elektrisches Heizelement (122) umfasst, und wobei mindestens eine der Radachseneinheiten (20, 22) einen elektrischen Verbinder (104, 106) transportiert, der dazu angeordnet ist, einen elektrischen Verbinder des Heizelements (122) im Ansprechen auf eine Bewegung der mindestens einen Radachseneinheit im Hinblick auf die SchalenbaugruppenDurchgangsbohrung elektrisch in Eingriff zu nehmen.

5. Reifenaufbaukernbaugruppe nach mindestens einem der vorhergehenden Ansprüche, wobei der elektrische Verbinder (122) der mindestens einen Radachseneinheit (20, 22) einen elektrischen Kontakt mit dem Heizelementverbinder unterbricht, wenn die mindestens eine Radachseneinheit im Hinblick auf die Schalenbaugruppen-Durchgangsbohrung bewegt wird.

6. Reifenaufbaukernbaugruppe nach mindestens einem der vorhergehenden Ansprüche, wobei der elektrische Verbinder der mindestens einen Radachseneinheit umfänglich angeordnet und so positioniert ist, dass er sich mit dem Heizelementverbinder ausrichtet, wenn sich die mindestens eine Radachseneinheit axial in die Schalenbaugruppen-Durchgangsbohrung bewegt.

7. Reifenaufbaukernbaugruppe nach mindestens einem der vorhergehenden Ansprüche, wobei mindestens eine der Radachsenbaugruppen einen vorstehenden hinteren Endabschnitt umfasst, der so gestaltet ist, dass er sich mit einem Reifenaufbaukernbaugruppen-Transportarm verbindet, wobei der hintere Endabschnitt der mindestens einen Radachseneinheit vorzugsweise eine Steckaufnahme aufweist.

8. Reifenaufbaukernbaugruppe nach mindestens einem der vorhergehenden Ansprüche, wobei die Radachseneinheiten jeweils eine Umfangsfläche umfassen, um die Schalensegmente in der zusammengesetzten Konfiguration zu haltern.

9. Verfahren zum Zusammensetzen eines Reifenaufbaukerns der Bauart, die mehrere Schalensegmente (16, 18) besitzt, die in einer zusammengesetzten Konfiguration eine reifenhalternde Torusfläche und eine zentrale Durchgangsbohrung bilden, wobei das Verfahren umfasst:
Ausrichten der Schalensegmente (16, 18) in die zusammengesetzte Konfiguration;
Vorschieben der ersten und zweiten langgestreckten Radachseneinheit (20, 22) in die zentrale Durchgangsbohrung; und
Verbinden der ersten und zweiten Radachseneinheit (20, 22) im Inneren der Schalenbaugruppe, um die Schalensegmente (16, 18) in der zusammengesetzten Konfiguration zurückzuhalten.

10. Verfahren nach Anspruch 9, darüber hinaus umfassend:
a) Vorstehenlassen eines Endabschnitts mindestens einer Radachseneinheit (20, 22) aus der Schalenbaugruppen-Durchgangsbohrung, wobei der vorstehende Endabschnitt so gestaltet ist, dass er sich mit einem äußeren Kernbaugruppen-Eingriffsarmmechanismus verbindet; und/oder
b) Herstellen einer elektrischen Verbindung zwischen einem Verbinder mindestens einer der Radachseneinheiten und einem Heizelement mindestens eines Schalensegments.

## Revendications

1. Assemblage de partie centrale de confection de bandage pneumatique (10) comprenant :
un assemblage d'enveloppe (12) configuré pour procurer une surface toroïdale externe de confection de bandage pneumatique et un alésage central de passage d'assemblage d'enveloppe ; et
un assemblage de broche allongée (14) comprenant des première et deuxième unités de broches (22) configurées pour s'étendre en direction axiale à partir de côtés opposés jusque dans l'alésage de passage de l'assemblage d'enveloppe, les unités d'assemblage de broche (22) étant configurées pour s'accoupler au sein de l'alésage de passage de l'assemblage d'enveloppe afin de maintenir l'assemblage d'enveloppe (12) dans une configuration assemblée.

2. Assemblage de partie centrale de confection de bandage pneumatique selon la revendication 1, dans lequel l'assemblage d'enveloppe (12) possède plusieurs segments d'enveloppe (16, 18) qui sont mobiles entre une configuration assemblée formant la surface toroïdale externe de confection de bandage pneumatique et une configuration désassemblée, les segments d'assemblage d'enveloppe (16, 18) définissant l'alésage de passage central dans la configuration assemblée ; et dans lequel les unités de broches (22) au sein de l'alésage de passage retiennent les segments d'enveloppe (16, 18) dans la configuration assemblée.

3. Assemblage de partie centrale de confection de bandage pneumatique selon la revendication 1 ou 2, comprenant en outre au moins un élément de chauffage (122) couplé à l'assemblage d'enveloppe (12), au moins une des unités de broche (20, 22) transportant un connecteur électrique (104, 106) positionné pour entrer en contact avec un connecteur électrique dudit au moins un élément de chauffage (122) en réponse au mouvement de ladite unité de broche (20, 22) par rapport à l'alésage de passage de l'assemblage d'enveloppe.

4. Assemblage de partie centrale de confection de bandage pneumatique selon au moins une des revendications précédentes, dans lequel au moins un segment d'enveloppe (16, 18) englobe un élément de chauffage électrique (122), et dans lequel au moins une des unités de broches (20, 22) transporte un connecteur électrique (104, 106) positionné pour entrer en contact avec un connecteur électrique de l'élément de chauffage (122) en réponse au mouvement de ladite au moins une unité de broche par rapport à l'alésage de passage de l'assemblage d'enveloppe.

5. Assemblage de partie centrale de confection de bandage pneumatique selon au moins une des revendications précédentes, dans lequel le connecteur électrique (122) de ladite au moins une unité de broche rompt (20, 22) le contact électrique avec le connecteur de l'élément de chauffage lorsque ladite au moins une unité de broche se déplace par rapport à l'alésage de passage de l'assemblage d'enveloppe.

6. Assemblage de partie centrale de confection de bandage pneumatique selon au moins une des revendications précédentes, dans lequel le connecteur électrique de ladite au moins une unité de broche est disposé à la périphérie et est positionné de façon à venir s'aligner avec le connecteur de l'élément de chauffage lorsque ladite au moins une unité de broche se déplace en direction axiale dans l'alésage de passage de l'assemblage d'enveloppe.

7. Assemblage de partie centrale de confection de bandage pneumatique selon au moins une des revendications précédentes, dans lequel au moins une des unités de broche englobe une portion terminale saillante orientée vers l'arrière, qui est configurée pour s'accoupler avec un bras de transport de l'assemblage de partie centrale de confection, la portion terminale, orientée vers l'arrière, de ladite au moins une unité de broche, comprenant de préférence une douille.

8. Assemblage de partie centrale de confection de bandage pneumatique selon au moins une des revendications précédentes, dans lequel les unités de broche englobent respectivement une surface périphérique pour supporter les segments d'enveloppe dans la configuration assemblée.

9. Procédé pour assembler un partie centrale de confection de bandage pneumatique du type possédant plusieurs segments d'enveloppe (16, 18) formant, dans une configuration assemblée, une surface toroïdale de support de bandage pneumatique et un alésage de passage central, le procédé comprenant le fait de :
orienter les segments d'enveloppe (16, 18) dans la configuration assemblée ;
faire avancer des première et deuxième unités de broches allongées (20, 22) dans l'alésage de passage central ; et
accoupler l'une à l'autre la première et la deuxième unité de broche (20, 22) au sein de l'assemblage d'enveloppe afin de retenir les segments d'enveloppe (16, 18) dans la configuration assemblée.

10. Procédé selon la revendication 9, comprenant en outre le fait de :
a) s'arranger pour qu'une portion terminale d'au moins une unité de broche (20, 22) fasse saillie par rapport à l'alésage de passage d'assemblage d'enveloppe, la portion terminale saillante étant configurée pour s'accoupler avec un mécanisme externe de bras de mise en contact avec l'assemblage de partie centrale ; et/ou
b) établir une connexion électrique entre un connecteur d'au moins une des unités de broches et un élément de chauffage d'au moins un segment d'enveloppe.
